## Europäisches Patentamt
## European Patent Office
## Office européen des brevets

(19)

(11) Numéro de publication: **0 010 005 B1**

(12) **FASCICULE DE BREVET EUROPEEN**

(45) Date de publication du fascicule de brevet: **02.09.81**

(51) Int. Cl.³: **B 60 K 15/04**

(21) Numéro de dépôt: **79400557.9**

(22) Date de dépôt: **07.08.79**

(54) Dispositif de condamnation à distance de trappe à essence.

(30) Priorité: **22.09.78 FR 7827172**

(43) Date de publication de la demande:
**16.04.80 Bulletin 80/8**

(45) Mention de la délivrance du brevet:
**02.09.81 Bulletin 81/35**

(84) Etats Contractants Désignés:
**BE DE GB IT SE**

(56) Documents cités:
**CH - A - 310 119**
**DE - A - 2 040 927**
**US - A - 3 868 134**
**US - A - 3 912 322**
**US - A - 3 915 491**

(73) Titulaire: **REGIE NATIONALE DES USINES RENAULT**
**Boite postale 103 8-10 avenue Emile Zola**
**F-92109 Boulogne-Billancourt (FR)**

(72) Inventeur: **Roue, Yves**
**J.M.S. Foyer de Puteaux Avenue Edouard Vaillant**
**F-92800 - Puteaux (FR)**

(74) Mandataire: **Noel, Michel et al,**
**RNUR - S.0804-MN B.P. 103**
**F-92109 Boulogne-Billancourt (FR)**

Courier Press, Leamington Spa, England.

## Dispositif de condamnation à distance de trappe à essence.

La présente invention, due à la collaboration de M. Yves ROUE, se rapporte à un dispositif de condamnation à distance de la trappe à essence d'un véhicule automobile.

Il est connu de verrouiller le portillon extérieur ou trappe d'accès au bouchon du réservoir à essence soit au moyen d'une serrure munie d'une clef particulière, soit par un actionneur électrique, électromagnétique ou pneumatique incorporé dans le caisson de la carrosserie et commandé à distance à partir de commandes centralisées au tableau de bord ou combinées aux commandes de verrouillage des portes et autres accès.

L'actionneur peut être soit monté à proximité immédiate mais à l'extérieur de la trappe et posséder un noyau plongeur en saillie venant verrouiller la gâche solidaire de la paroi intérieure du portillon, soit monté à l'intérieur même de la trappe et posséder un crochet pivotant afin de verrouiller un pêne solidaire de la paroi intérieure du portillon, comme cela est décrit dans le brevet américain antérieur No. 3 915 491.

Dans le cas d'un actionneur extérieur à la trappe, une telle condamnation présente des difficultés particulières de réalisation, essentiellement de trois ordres:

—d'une part, il faut prévoir et organiser les cas de défaillances du circuit et/ou des actionneurs afin de libérer la trappe à essence,

—d'autre part, le système de verrouillage qui communique avec le caisson du véhicule doit être étanche aux vapeurs d'essence en provenance du réservoir,

—de plus, le verrouillage réalisé doit être efficace et ne pas céder à la première tentative d'effraction.

Le but de l'invention est de résoudre ces difficultés en proposant une réalisation particulièrement étudiée du verrouillage, de son étanchéité par rapport au reste de la carrosserie et de la commande manuelle de secours.

A cet effet, l'invention a pour objet un dispositif de condamnation à distance de la trappe à essence d'un véhicule automobile au moyen d'un actionneur monté à l'intérieur de la carrosserie mais à l'extérieur de la trappe et dont le noyau mobile, en liaison avec le pêne, est susceptible de verrouiller une gâche intérieure solidaire du portillon de la trappe, essentiellement caractérisé en ce que:

—le pêne coulisse à travers la coupelle intérieure de la trappe par l'intermédiaire d'organes d'étanchéité et de guidage entourant le pêne,

—la gâche est formée par un étrier muni d'une boutonnière débouchant dans un logement borgne,

—la liaison pêne-actionneur est réalisée par une tringle reliée au noyau de l'actionneur par l'intermédiaire d'un bouton de commande manuelle accessible de l'intérieur du véhicule.

L'ensemble forme un dispositif de condamnation simple et de montage facile répondant aux exigences des véhicules actuels en matière de sécurité.

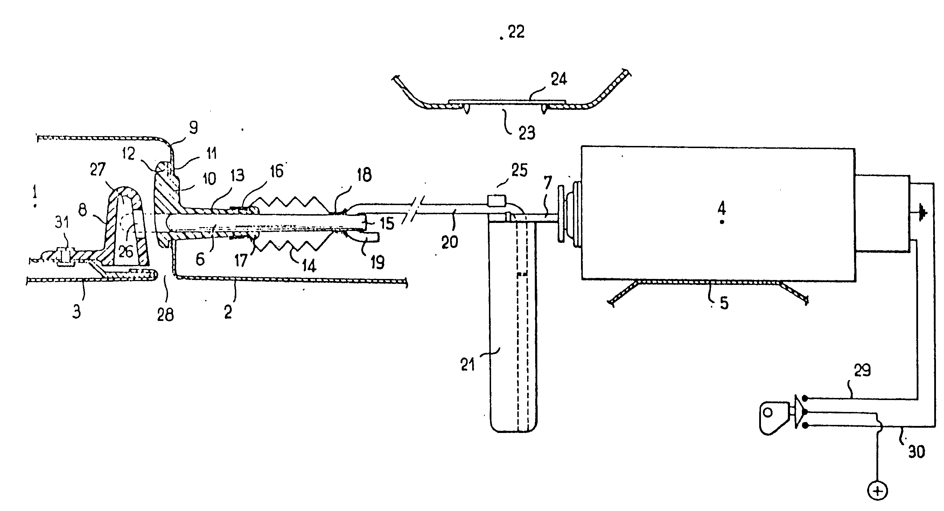

D'autres particularités de l'invention ressortiront de la description qui suit, d'un mode de réalisation donné à titre d'exemple, en référence au dessin annexé sur lequel la figure unique représente en coupe longitudinale le dispositif de condamnation à l'état déverrouillé.

Le dispositif est installé au voisinage de la trappe à essence 1, à l'intérieur de la carrosserie 2 et parallèlement au portillon pivotant 3 donnant accès au bouchon du réservoir (non représenté). Ce dispositif est composé essentiellement d'un actionneur 4, par exemple électromagnétique, fixé à l'extérieur de la trappe sur la tôle 5 du passage de roue, un pêne coulissant 6, mû à distance, dans le prolongement du mouvement alternatif rectiligne du noyau 7 de l'actionneur et une gâche 8 fixée sur la paroi intérieure du portillon 3. Déplacé dans le sens de la condamnation, le pêne 6 traverse la coupelle 9 de la trappe pour venir verrouiller la gâche 8 de façon connue en soi.

Conformément à une première caractéristique de l'invention, le pêne 6 est une simple tige guidée en translation à travers la coupelle 9 par un bouchon perforé 10 en matière plastique venant obstruer l'orifice 11 largement dimensionné de la coupelle avec interposition d'un joint d'étanchéité 12 en matière élastique entre ledit bouchon et la tôle de la coupelle.

Pour assurer un meilleur guidage, le bouchon 10 est prolongé vers l'actionneur par un manchon 13 entourant le pêne et venant de moulage avec le bouchon 10.

L'étanchéité aux vapeurs d'essence en provenance du réservoir est complétée efficacement au moyen d'un soufflet élastique 14 entourant la queue 15 du pêne au-delà du manchon de guidage 13. Le soufflet 14 possède une collerette à chaque extrémité dont la première 16 est serrée autour de l'extrémité du manchon munie d'un bourrelet de retenue 17 et la seconde 18 serrée autour de l'extrémité 15 du pêne en prenant appui sur le crochet 19 de la tringle de liaison 20 entre le pêne 6 et le noyau 7 de l'actionneur. Selon une seconde caractéristique de l'invention, un bouton de commande manuelle de secours 21 est fixé sur la liaison pêne-action-neur. Ainsi, en cas de défaillance du circuit électrique ou d'un élément mécanique quelconque du dispositif, le conducteur peut intervenir manuellement pour condamner ou déverrouiller la trappe en manoeuvrant le bouton 21 accessible de l'intérieur du véhicule. S'agissant, par exemple d'une trappe disposée sur le côté arrière du véhicle et d'un actionneur fixé au niveau du passage de roue arrière, le bouton 21 sera, dans ce cas, accessible par le coffre à bagages 22 par une ouverture 23 ménagée dans la paroi latérale du coffre et recouverte d'une plaque discrète escamotable 24. Dès lors, on comprend mieux la nécessité de l'étanchéité décrite précédemment, notamment à cause de la communication avec l'habitacle du véhicule.

La tringle de liaison 20, qui peut être de grande longueur, est crochetée, on l'a vu 19, sur l'extrémité 15 du pêne.

L'autre extrémité de la tringle est reliée à l'extrémité saillante du noyau 7 de l'actionneur par l'intermédiaire du bouton de commande manuelle 21 dont une extrémité forme un clip d'agrafage 25 et joue en même temps le rôle d'organe d'assemblage.

Pour montrer l'agrafage, le bouton 21 a été tourné volantairement sur le dessin d'un quart de tour par rapport au plan de coupe mais, en fonctionnement, la partie inférieure du bouton est parallèle à la carrosserie 2. Selon une autre caractéristique de l'invention, la gâche 8 rivée en 31 sur la paroi intérieure du portillon 3 est constituée par un étrier de préférence en plastique moulé présentant, sur l'une des faces en "epingle à cheveux", une boutonnière 26 centrée sur le pêne 6.

Pour la condamnation, le pêne pénètre dans la boutonnière et débouche dans le logement borgne 27 de la gâche. L'extrémité du pêne 6 est arrondie pour faciliter cette introduction.

La forme caissonnée 27 de la gâche constitue une meilleure sécurité car, après le verrouillage, l'extrémité du pêne n'est pas accessible de l'extérieur même après l'introduction d'un outil dans le joint 28 existant entre le portillon 3 et la carrosserie 2.

Par ailleurs, la forme légèrement conique de l'étrier 8 et l'emplacement de la fixation 31 de la gâche déportée vers la charnière du portillon autorisent la condamnation automatique à la fermeture de la trappe 3 même si le pêne 6 était déjà dans la position de verrouillage (pointillés).

En effet, on joue alors sur le flambage de la tige du pêne 6 et sur l'élasticité de la gâche 8 et du portillon 3.

La commande électrique de l'actionneur est réalisée de façon classique par un commutateur isolé ou combiné aux serrures électromagnétiques des autres voies d'accès du véhicule et représenté ici schématiquement par une clef permettant d'appliquer le courant à volonté sur le circuit de condamnation 29 ou sur le circuit de décondamnation 30 des différents actionneurs dont celui de la trappe à essence.

En outre, il est utile de prévoir un contacteur à inertie qui assure la décondamnation des actionneurs en cas de choc et un disjoncteur thermique qui protège les circuits et les actionneurs contre les surintensités.

## Revendications

1. Dispositif de condamnation à distance d'une trappe à essence (1) d'un véhicle automobile au moyen d'un actionneur (4), monté à l'intérieur de la carrosserie mais à l'extérieur de la trappe, et dont un noyau mobile (7) en liaison avec un pêne (6) est susceptible de verrouiller une gâche intérieure (8) solidaire d'un portillon (3) de la trappe, caractérisé en ce que le pêne (6) coulisse à travers une coupelle intérieure (9) de la trappe (1) par l'intermédiaire d'organes de guidage (10, 13) et d'étanchéité (12, 14) aux vapeurs d'essence.

2. Dispositif selon la revendication (1), caractérisé en ce que l'organe de guidage est un bouchon perforé (10) obstruant l'orifice (11) de la coupelle (9) et prolongé vers l'actionneur par un manchon (13) entourant le pêne (6).

3. Dispositif selon les revendications 1 et 2, caractérisé en ce que l'étanchéité est assurée notamment par un soufflet élastique (14) présentant une collerette à chaque extrémité dont la première (16) est serrée autour de l'extrémité du manchon (13) munie d'un bourrelet de retenue (17) et la seconde (18) serée autour de l'extrémité (15) du pêne.

4. Dispositif de condamnation à distance d'une trappe à essence (1) d'un véhicle automobile au moyen d'un actionneur, (4) monté à l'intérieur de la carrosserie mais à l'extérieur de la trappe, et dont un noyau mobile (7), en liaison avec un pêne (6), est susceptible de verrouiller une gâche intérieure (8) solidaire d'un portillon (3) de la trappe, caractérisé en ce que la gâche (8) est formée par un étrier muni d'une boutonnière (26) débouchant dans un logement borgne (27).

5. Dispositif de condamnation à distance d'une trappe à essence (1) d'un véhicle automobile au moyen d'un actionneur, (4) monté à l'intérieur de la carrosserie mais à l'exterieur de la trappe, et dont un noyau mobile (7) en liaison avec un pêne (6) est susceptible de verrouiller une gâche intérieure (8) solidaire d'un portillon (3) de la trappe, caractérisé en ce qu'un bouton de commande manuelle de secours (21), accessible de l'intérieur (22) du véhicule, est fixé sur la liaison pêne (6)-actionneur (4).

6. Dispositif selon la revendication (5), caractérisé en ce que la liaison rectiligne est réalisée au moyen d'une tringle (20) crochetée, d'une part, sur l'extrémité (15) du pêne et reliée, d'autre part, à l'extrémité du noyau (7) de l'actionneur par l'intermédiaire du bouton de commande manuelle (21) dont une extrémité sert d'agraft (25).

## Patentansprüche

1. Vorrichtung zum ferngesteuerten Verschließen des Tankstutzens (1) eines Kraftfahrzeuges, mit einer innerhalb der Karosserie aber außerhalb des Stutzens vorgesehenen Betätigungsanordnung (4), die mit einem beweglichen Stab (7) versehen ist, der zusammen mit einem Riegel (6) in ein an der Innenseite der Abdeckklappe (3) angeordnetes Verschlußteil (8) verriegelnd eingreifen kann, dadurch gekennzeichnet, daß der Riegel (6) in einer Innenkappe (9) des Stutzens (1) verschiebbar mittels Führungsanordnungen (10, 13) und Dichtungsdanordnungen (12, 14) zum Schutz gegen Benzindämpfe angeordnet ist.

2. Vorrichtung nach Anspruch 1, dadurch gekennzeichnet, daß die Führungsanordnung ein durchbohrter Stopfen (10) ist, der die Öffnung (11) der Kappe (9) verschließt und sich in Richtung zer Betätigungsanordnung in einer den Riegel (6) umgebenden Buchse (13) fortsetzt.

3. Vorrichtung nach Ansprüchen 1 und 2, dadurch gekennzeichnet, daß zur Abdichtung ein elastischer Balg (14) vorgesehen ist mit einem Befestigungsflansch an jedem Ende, wobei der erste Flansch (16) das mit einer Haltewulst (17) versehene Ende der Buchse (13) klemmend umgreift und der zweite Flansch (18) das Ende (15) des Riegels klemmend umgreift.

4. Vorrichtung zum ferngesteuerten Verschließen des Tankstutzens (1) eines Fahrzeuges mit einer innerhalb der Karosserie aber außerhalb des Stutzens vorgesehenen Betätigungsanordnung (4), die mit einem beweglichen Stab (7) versehen ist, der zusammen mit einem Riegel (6) in ein an der Innenseite der Abdeckklappe (3) angeordnetes Verschlußteil (8) verriegelnd eingreifen kann, dadurch gekennzeichnet, daß das Verschlußteil (8) aus einem Verschlußbügel besteht mit einer in einen Blindraum (27) führenden Aussparung (26).

5. Vorrichtung zum ferngesteuerten Verschließen des Tankstutzens (1) eines Fahrzeuges mit einer innerhalb der Karosserie aber außerhalb des Stutzens vorgesehenen Betätigungsanordnung (4), die mit einem beweglichen Stab (7) versehen ist, der zusammen mit einem Riegel (6) in ein an der Innenseite der Abdeckklappe (3) angeordnetes Verschlußteil (8) verriegelnd eingreifen kann, dadurch gekennzeichnet, daß ein manuell betätigbarer Sicherheitsriegel (21), der vom Inneren des Kraftfahrzeuges aus zugänglich ist, an der Verbindung aus Riegel (6) — Betätigungsanordnung (4) vorgesehen ist.

6. Vorrichtung nach Anspruch 5, dadurch gekennzeichnet, daß die geradlinige Verbindung aus einer Stange (20) besteht, die einmal mit dem Ende (15) des Riegels über einen Haken verbunden ist und zum anderen mit dem Ende des Stabes (7) der Betätigungsanordnung über den Sicherheitsriegel (21) verbunden ist, dessen eines Ende als Klammer (25) ausgebildet ist.

## Claims

1. A device for the remote locking of a petrol flap assembly (1) of a motor vehicle by means of an actuator (4) which is mounted within the body but outside the flap assembly and whose movable stem member (7), connected to a bolt member (6), is capable of locking an internal catch member (8) which is fixed with respect to a flap member (3) of the flap assembly, characterised in that the bolt member (6) slides through an internal cup member (9) of the petrol flap assembly (1) by way of guide means (10, 13) and means (12, 14) for sealing in respect of petrol vapours.

2. A device according to claim 1 characterised in that the guide means is a perforated plug member (10) which closes off the opening (11) in the cup member (9) and which is extended towards the actuator by a sleeve portion (13) around the bolt member (6).

3. A device according to claims 1 and 2 characterised in that the sealing action is provided in particular by a resilient bellows member (14) having a collar at each end, the first collar (16) being clamped aroung the end of the sleeve portion (13) which is provided with a retaining bead (17), while the second collar (18) is clamped around the end (15) of the bolt member.

4. A device for the remote locking of a petrol flap assembly (1) of a motor vehicle by means of an actuator (4) which is mounted within the body but outside the flap assembly and whose movable stem member (7), connected to a bolt member (6), is capable of locking an internal catch member (8) which is fixed with respect to a flap member (3) of the flap assembly, characterised in that the catch member (8) is formed by a stirrup member provided with a slot (26) which opens into a blind housing (27).

5. A device for the remote locking of a petrol flap assembly (1) of a motor vehicle by means of an actuator (4) which is mounted within the body but outside the flap assembly and whose movable stem member (7), connected to a bolt member (6), is capable of locking an internal catch member (8) which is fixed with respect to a flap member (3) of the flap assembly characterised in that an auxiliary manual actuating button (21) which is accessible from the interior (22) of the vehicle is fixed on the bolt member (6)-activator (4) connection.

6. A device according to claim 5 characterised in that the rectilinear connection is provided by means of a rod (20) which at one end is hooked on to the end (15) of the bolt member and which at the other end is connected to the end of the stem member (7) of the actuator by way of the manual actuating button (21), one end of which serves as a fastener (25).